# EUROPEAN PATENT APPLICATION

(11) **EP 1 788 777 A2**
(43) Date of publication of application: **23.05.2007**
(21) Application number: 06126529.4
(22) Date of filing: 21.04.2005
(51) Int. Cl.: H04L 29/06, H04M 7/00, H04N 7/52

(54) **Transmission of video over IP**

(30) Priority: 19.05.2004 IL 16207504
(62) Divisional of application: 05736769.0
(71) Applicant: Surf Communication Solutions, Ltd., Yokneam 20692 (IL)
(72) Inventor: Fisher, Abraham, 34367 Haifa (IL)
(74) Representative: van Westenbrugge, Andries

(57) **Abstract**

A method of handling video signals by a media server. The method includes receiving packets of a plurality of separate packet connections including different types of signals belonging to the same multimedia communication session;
generating a single signal stream including the received different types of signals, in a synchronised manner;
packing the single signal stream into packets with packet headers of a single packet connection; and
transmitting the packets of the single packet connection onto a packet based network.

## Description

### FIELD OF THE INVENTION

The present invention relates to communication systems and in particular to systems for handling transmission of video signals over hybrid networks.

### BACKGROUND OF THE INVENTION

Traditionally, communication networks were switched based. In switched based networks, when two or more parties want to communicate, a dedicated channel is assigned in the network for their communication. Up to this date, most telephone networks are still switched networks. In the world of computer communications, communication networks are generally packet based networks, for example using the IP protocol suite. In recent years, there is a trend of movement from switched networks to packet based networks, even for telephony. IP networks are used for backbone portions of telephone networks and also for end to end telephone communications, in what is referred to as voice over internet protocol (VoIP) telephony. Also cellular telephone networks, which began as solely switched networks, are moving toward use of packet based networks. Accordingly, third generation (3G) telephone networks provide packet based channels.

There are many applications for transmission of video signals. These applications include, for example, video telephone conversations, video conferencing and downloading of video clips. Separate formats were defmed for transmission of video signals, in packet based networks and in switched networks.

The 3G-324M standard (also known as H.324M) defines a signal format for transmitting video and audio signals between cellular telephones and other entities (video servers) within a third generation (3G) network. The 3G-324M standard packs audio, video and control signals into a single 64K bit rate combined video signal stream. The 3G-324M standard uses the H.223 protocol to manage the mixing of different types of signals (e.g., audio, video, data) into a single stream, together with control signals. Within the H.223 stream, signals of different types are transmitted in frames, in a synchronized manner. Each frame has a short header that states the type of data in the frame and optionally states retransmission information. Control information on the video stream indicates the time constraints of the synchronization of the data of the different types.

Transmission of video signals within packet based networks is generally performed using the session initiation protocol (SIP) or H.323 protocol, in which separate UDP (user datagram protocol) connections are used for video, voice and control signals. The control signals are transmitted using SIP or H.323 over UDP/IP, while the video, voice and/or other media signals are transmitted over the real time protocol (RTP), over UDP/IP. The video signals over IP networks do not generally have a fixed bit rate.

Even within the general format of transmission of signals in packet based networks, different specific signal formats, for example different compression formats, may be used by different end-units. In order to allow end units supporting different video formats to communicate, media servers which perform transcoding between video formats are employed.

US patent publication 2003/0043782 to Laursen et al., the disclosure of which is incorporated herein by reference, describes a media server which performs format conversion.

When it is desired to transmit signals between a switched network and a packet based network, a gateway is employed at the connection point of the networks, to convert the signals between the different formats of the networks. With relation to video signals, the gateway terminates the 3G-324M protocol toward the mobile network, terminates the RTP voice, RTP video and the SIP/H.323 signals toward the IP network, and when necessary transcodes the video signals between the formats of the different networks. The gateway identifies the type (e.g., video, fax, voice, modem) of the signals passing on the channels it handles and accordingly handles the signals of the channels.

A paper titled "Video Conferencing over 3G-324M Enabled Networks" downloaded from www.teamsolutions.co.uk/ts**3g-324m.**html on April 29, 2004, describes performing video conferencing in accordance with the 3G-324M standard between a cellular telephone and a terminal outside the cellular telephone network, the disclosure of which is incorporated herein by reference. A gateway converts the 3G-324M signals into IP signals in accordance with the H.323 standard.

US patent publication 2005/0009519 to Murai et al., the disclosure of which is incorporated herein by reference, describes a 3G gateway which includes a video transcoder that transcodes, if necessary, MPEG-4 video signals into a format supported by a destination receiving the signals.

The use of a video gateway between networks requires expensive systems with large amounts of processing resources. Also, the use of video gateways may add noticeable delay to the transmission of real time video signals.

US patent publication 2005/0071876 to van Beek, the disclosure of which is incorporated herein by reference, describes in paragraph [0070] a system that transcodes video signals from the MPEG-2 format to the MPEG-4 format.

US patent publication 2004/0049797 to Salmonsen, the disclosure of which is incorporated herein by reference, describes a network interface for a video device.

US patent publication 2004/0196867 to Ejzak et al., the disclosure of which is incorporated herein by reference, describes apparatus for managing conference calls.

US patent publication 2003/0018794 to Zhang et al., the disclosure of which is incorporated herein by reference, describes a network gateway that establishes a communication channel from the server to the wireless host through both a wireline network and a wireless network.

US patent publication 2002/0199203 to Duffy et al., the disclosure of which is incorporated herein by reference, describes a switched digital video gateway.

US patent publication 2004/0158647 to Omura et al., the disclosure of which is incorporated herein by reference, describes a gateway for connecting different types of networks.

The V.150.1 recommendation and the V.152 recommendation, the disclosures of which are incorporated herein by reference, describe methods of transferring modem signals over IP networks.

### SUMMARY OF THE INVENTION

An aspect of some embodiments of the present invention relates to a gateway between a switched circuit network (e.g., a cellular network) and a packet based network, that applies a pass-through mode of operation to a video connection (referred to herein also as a video channel). In the pass-through mode of operation, the gateway parses the signals of the video connection from the switched circuit network into packets, without relating to the content of the signals. Optionally, in the packet based network, the signals reaching the gateway and/or transmitted by the gateway are included in a single packet based connection. In some embodiments of the invention, the packets of a single packet based connection have the same source and destination port numbers, the same source and destination addresses and the same protocol ID.

In some embodiments of the invention, the signals of the video connection include both video signals and control signals. Video signals and control signals passing together on the switched circuit network are optionally passed onto packets of a single packet based connection. In some embodiments of the invention, the signals of the video connection include data signals of a plurality of different types (e.g., voice, audio, data), which on the packet network are included in a single packet based connection. Optionally, the video and audio signals of the connection are at least partially synchronized.

Optionally, the gateway applies the pass-through mode of operation selectively only to some of the signals it handles, while other signals are handled using other modes of operation. In some embodiments of the invention, the gateway handles also telephony connections, the telephony connections being handled by the gateway with relation to their content, for example by compressing the voice signals.

In some embodiments of the invention, the gateway identifies the type of connection it is handling based on a signaling received from the initiator of the connection and/or from the network initiating the connection. For example, the type of the connection may be identified by the telephone number dialed. Alternatively or additionally, the gateway identifies video connections based on the content of the signals of the connection. For example, the gateway may identify video connections based on the presence of H.223 flags.

Optionally, in the cellular network, the combined video signals are in accordance with the 3G-324M standard.

In some embodiments of the invention, the combined video signals on the single connection are passed to a packet network end-unit (e.g., a video phone), which is adapted to receive IP packets in which combined video signals are encapsulated in a single stream.

In other embodiments of the invention, the combined video signals pass on their way between the packet based end-unit and the gateway through a media server, which converts the combined video signals between a multi-connection format supported by the end-unit and a single stream format supported by the gateway. Optionally, the media server also transcodes the video signals, when required. Having the transcoding performed by a media server rather than at the gateway, allows implementing the conversion at one or more central media servers rather than implementing the conversion at all gateways between the IP network and the cellular network.

In still other embodiments of the invention, the combined video signals are passed to another gateway where they are passed back to a switched circuit network link, without examination of the content of the signals.

An aspect of some embodiments of the present invention relates to a media server that converts video signals of a combined video connection including video, audio and control signals received over a single packet based connection into a plurality of separate packet based connections.

An aspect of some embodiments of the present invention relates to a gateway between a switched circuit cellular network and a packet based network that handles both video and voice connections. Optionally, the gateway handles video connections differently than voice connections.

An aspect of some embodiments of the present invention relates to identifying video connections, for determining a method of handling by a gateway, based on the data content of the connection. The determination method may be performed by the gateway, or may be performed by connection router, which directs connections to different gateways according to the signals they carry.

There is therefore provided in accordance with an exemplary embodiment of the invention, a method of handling video signals by a gateway, comprising determining, by the gateway, that a circuit switched channel carries video signals, receiving, by the gateway, a signal stream from the circuit switched channel determined to carry video signals, placing the signals of the received signal stream in packets of a single packet connection, and transmitting the packets of the single packet connection, by the gateway, on a packet based network.

Optionally, placing the signals of the received signal stream in packets comprises placing the signals in a manner independent of the content of the signals. Optionally, placing the signals in a manner independent of the content of the signals comprises placing in a manner which allows breaking of frames within the stream between two or more packets.

Optionally, placing the signals in a manner independent of the content of the signals comprises placing in a manner which allows signals of two or more frames to be included in a single packet. Optionally, determining that the circuit switched channel carries video signals comprises determining at least partially based on examination of the signal stream.

Optionally, determining that the circuit switched channel carries video signals comprises identifying a pattern indicative of video signals in the signal stream received on the channel. Optionally, receiving the signal stream comprises receiving a H.223 signal stream.

Optionally, receiving the signal stream comprises receiving a stream carrying combined audio and video signals. Optionally, receiving the signal stream comprises receiving a stream carrying at least partially synchronized audio and video signals. Optionally, receiving the signal stream comprises receiving combined video, audio and control signals. Optionally, placing the signals of the received signal stream in packets comprises placing the signals in the packets without compressing the signals by the gateway. Optionally, the method includes determining by the gateway that a second channel carries voice signals, compressing the signals of the second channel by the gateway and packing the compressed voice signals into packets. Optionally, the circuit switched channel passes over a terrestrial cellular network.

Optionally, transmitting the packets comprises transmitting to a gateway, directly to an end unit and/or to a media server.

There is further provided in accordance with an exemplary embodiment of the invention, a gateway, comprising a switched circuit interface, a packet network interface, and a processor adapted to determine a type of a channel of signals received by the switched circuit interface, and to pack the signals of at least one channel determined to carry video signals into packets of a single packet connection and transmit the packets through the packet network interface.

Optionally, the processor is adapted to handle signals of channels not determined to carry video signals, differently from signals of channels determined to carry video signals.

There is further provided in accordance with an exemplary embodiment of the invention, a method of handling video signals by a media server, comprising receiving packets of a plurality of separate packet connections including different types of signals belonging to a same multimedia communication session, generating a single signal stream including the received different types of signals, in a synchronized manner, packing the single signal stream into packets with packet headers of a single packet connection, and transmitting the packets of the single packet connection onto a packet based network.

Optionally, transmitting the packets comprises transmitting to a gateway. Optionally, the different types of signals include at least both voice and video signals. Optionally, the method includes transcoding signals of at least one of the different types of signals between different encoding formats. Optionally, generating the single signal stream comprises generating a H.223 signal stream. Optionally, the single stream includes frames of signals and packing the single signal stream into packets comprises packing without relation to borders between frames in the stream.

There is further provided in accordance with an exemplary embodiment of the invention, a gateway, comprising a switched circuit interface, a packet network interface, and a processor adapted to determine a type of a channel of signals received by the switched circuit interface, and to handle the transfer of signals of both video and voice connections between the switched circuit interface and the packet network interface.

Optionally, the processor is adapted to handle signals of video and voice connections differently.

There is further provided in accordance with an exemplary embodiment of the invention, a gateway array, comprising at least one voice gateway adapted to convert signals of voice connections between a switched circuit network and a packet based network, at least one video gateway adapted to convert signals of video connections between a switched circuit network and a packet based network and a signal router adapted to direct signals from the switched circuit network to one of the gateways based on examination of the signals to determine whether they belong to a voice or video connection.

### BRIEF DESCRIPTION OF FIGURES

Exemplary non-limiting embodiments of the invention will be described with reference to the following description of embodiments in conjunction with the figures. Identical structures, elements or parts which appear in more than one figure are preferably labeled with a same or similar number in all the figures in which they appear, in which:
Fig. 1 is a schematic illustration of a hybrid video network, in accordance with an exemplary embodiment of the invention;
Fig. 2 is a schematic illustration of transmission of video signals between a cellular videophone and an IP videophone, in accordance with an exemplary embodiment of the present invention;
Fig. 3 is a schematic illustration of video signals transmitted between a pair of cellular video phones, in accordance with an exemplary embodiment of the invention; and
Fig. 4 is a schematic illustration of a gateway array, in accordance with an exemplary embodiment of the invention.

### DETAILED DESCRIPTION OF EMBODIMENTS

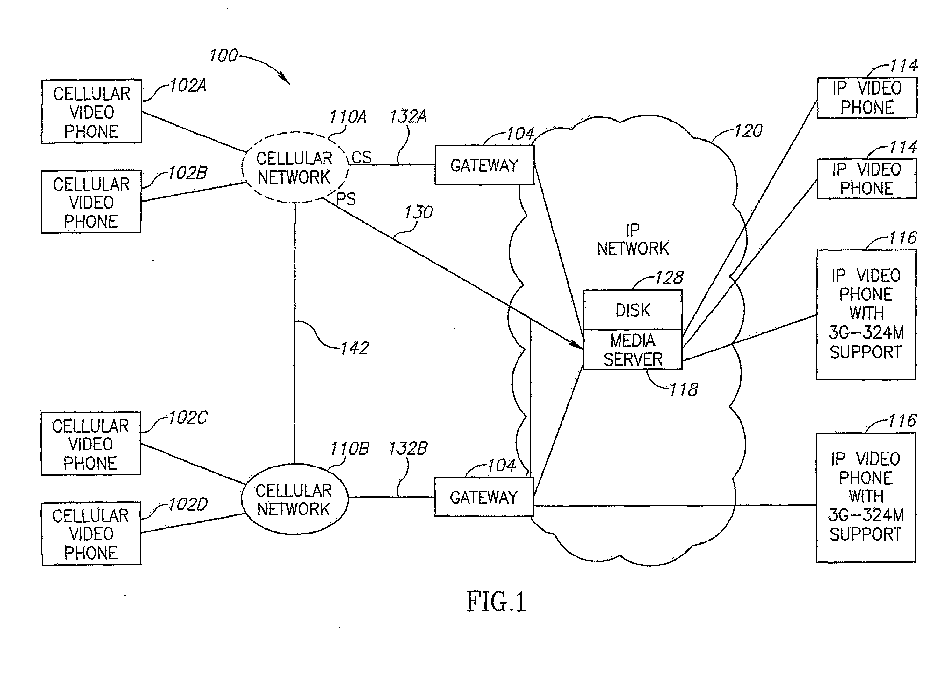

Fig. 1 is a schematic illustration of a hybrid video network 100, in accordance with an exemplary embodiment of the invention. Hybrid network 100 includes one or more cellular networks 110 (marked 110A and 1108), including wire line and/or wireless portions, which connect cellular video phones 102 (marked 102A, 102B, 102C and 102D) to each other. In addition, hybrid network 100 includes an IP network 120, which services IP video phones 114 and 116. When a telephone conversation is established between a cellular phone 102 and an IP phone 114 or 116, the cellular phone establishes a circuit switched connection 132 (marked 132A and 132B) to a gateway 104 and the video phone 114 establishes a packet connection to the gateway. Circuit switched connection 132 is optionally a 64kbps connection. Gateway 104 converts the signals between the different formats used in IP network 120 and in cellular network 110. A cellular phone 102 may also establish a packet based connection through its packet based network 110, which passes over a packed based connection 130 to IP network 120. In such cases, a packet based connection is established from end to end, and there is no need for a gateway 104 to perform signal conversions. Currently, the data loss rate on end to end packet connections between cellular telephones and IP phones is relatively high and is considered inadequate for video transmissions.

Fig. 1 illustrates both IP video phones 114, which only support IP video formats (e.g., SIP/H.323 for signaling and RTP for media), and IP video phones 116, which also support one or more cellular network formats, such as the 3G-324M format, as described below. A media server 118, within IP network 120, is optionally configured to receive IP packets having video signals in a single stream combined video format (e.g., 3G-324M) and convert the packets into IP packets with video signals in a multi-channel format (e.g., H.323), as explained hereinbelow. Optionally, media server 118 is also configured to convert packets with video signals in the multi-channel format into packets with video signals in the single stream combined format. It is noted that in the prior art, the conversion performed in Fig. 1 by media server 118 is performed by a video gateway between cellular network 110 and IP network 120. Performing the conversion in media server 118, instead of in the gateway, although logically out of place, makes the gateway much simpler and allows the media server to utilize its available resources to perform the conversion, rather than requiring dedicated resources in the gateway.

### Connection through media server

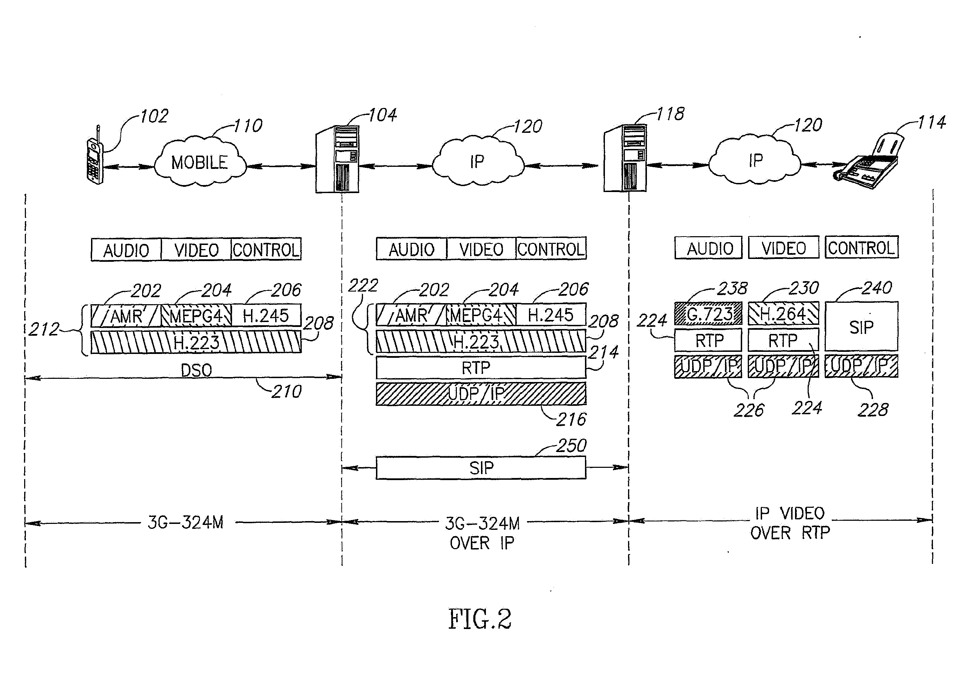

Fig. 2 is a schematic illustration of video signals transmitted between a cellular video phone 102 and an IP video phone 114, in accordance with an exemplary embodiment of the invention. Referring without loss of generality to transmission of video signals from cellular video phone 102, signals generated by cellular phone 102 are optionally in accordance with the 3G-324M cellular format in which a single combined stream includes control signals 206 and one or more types (e.g., video, audio, data) of information signals (202, 204) multiplexed together. In an exemplary embodiment of the invention, the signals are multiplexed according to the H.223 protocol, with H.223 header signals 208, so as to form H.223 signals 212. The H.223 signals 212 are optionally transmitted as a continuous stream on a DS0 channel (i.e., a 64kbps channel) of cellular network 110, represented by block 210. The stream is optionally formed of frames of different types. Each frame is optionally led by a header, the headers being represented schematically by the bar in Fig. 2 representing H.223 header signals 208.

In some embodiments of the invention, the H.223 header signals 208, or any other equivalent header, identify portions of the other direction (in a two way transmission) transmitted information that require retransmission. In some embodiments of the invention, header signals 208 can be used to identify video frames that were not received correctly, not necessarily as part of a transmitted data block or transmitted packet. Optionally, header signals 208 can be used only to identify some types of information for retransmission, while other types of information cannot be requested for retransmission using header signals 208. In some embodiments of the invention, header signals 208 can be used to identify application layer units that were not received correctly, such as video frames. In an exemplary embodiment of the invention, header signals 208 may optionally be used to indicate I-frames required for retransmission but not audio signals. Thus, the size of header signals 208 is minimized and/or the software on cellular telephone 102 and/or on gateway 104 implementing the H.223 protocol is made relatively simple.

In some embodiments of the invention, the header signals 208 includes less than 20 bytes or even less than 10 bytes for every 10 milliseconds of signals, in order to minimize the bandwidth wasted on overhead. Alternatively or additionally, header signals 208 include less than 10 bytes for each frame of voice or video data.

It is noted that the control signals are not necessarily transmitted continuously, as in some cases the control signals are transmitted only at the beginning of a connection, for establishing the connection. In some embodiments of the invention, the control signals are according to the H.245 protocol.

Optionally, signals 212 transmitted through cellular network 210 include information signals of a plurality of different types. In some embodiments of the invention, the signals of different types are at least partially synchronized within the connection. Optionally, the H.245 control signals define the time difference between the voice and video frames of the DS0 channel. Optionally, the information signals include audio signals 202 according to the AMR protocol and video signals 204 according to the MPEG-4 protocol.

At gateway 104, the H.223 signals 212 are packed into packets 222 of a single packet connection. Gateway 104 optionally adds to each combined packet 222 an RTP header 214 and a UDP/IP header 216 for transmission on IP network 120. Gateway 104 optionally does not change the content of the H.223 signals 212, when the signals are loaded into combined packets 222.

In parallel to the connection carrying combined packets 222, a SIP control connection 250 is established between gateway 104 and media server 118, in order to manage the connection. Thus, control signals are optionally transmitted both within the combined packets 222 and on SIP connection 250. The control signals within combined packets 222 are exchanged between media server 118 and cellular phone 102, optionally without gateway 104 relating or even viewing the packets. The control signals on SIP connection 250, on the other hand, are transmitted between media server 118 and gateway 104.

Media server 118 receives the combined packets 222 from gateway 104, removes the RTP and UDP/IP headers 214 and 216 and performs H.223 termination (i.e., handling of H.223 signals by a unit that does not pass the signals on). Optionally, media server 118 separates the audio signals 202, video signals 204 and control signals 206 from combined packets 222 into separate streams. Media server 118 generates for the audio signals 202 and video signals 204 RTP headers 224 and UDP/IP headers 226 of separate video and audio streams. Media server 118 optionally performs termination (i.e., end unit handling) of the H.245 control signals 206 and generates corresponding SIP or H.323 control signals 240 included in a third stream with UDP/IP headers 228. The SIP or H.323 control signals 240 are terminated in the other direction.

In some embodiments of the invention, one or more of the audio and video signals is converted by media server 118 into a different format. For example, audio signals 202 may be converted into G.729, G.723 or G.711 signals 238 and/or MPEG-4 video signals 204 are transcoded into H. 263 or H.264 signals 230. In other embodiments of the invention, the video signals are not transcoded and remain in the MPEG-4 format.

### Gateway

In some embodiments of the invention, gateway 104 is set to operate on all the connections it handles in the same way, using the procedure described above. That is, regardless of the type of signals passing on the connection (e.g., fax, telephone, modem, video), gateway 104 performs the same procedure, referred to herein as transparent operation. As mentioned above, in accordance with the transparent operation, gateway 104 does not examine the signals it receives but simply packs them into packets of predetermined size and adds RTP headers 214 and UDP headers 216. Packets received 222 by gateway 104 from network 120, are handled by the gateway by removing headers 214 and 216 and loading the bits of combined packets 222 onto the DS0 channel to which they belong.

Optionally, in embodiments in which gateway 104 operates on all types of signals transparently, gateway 104 serves only video connections. Alternatively, gateway 104 is configured to operate such that its transparent operation is suitable also for other types of signals, such as voice signals and modem signals. For example, the configuration optionally includes selecting a packet size for combined packets 222 suitable for a wide range of types of signals.

Alternatively, when a connection is set-up, gateway 104 determines which mode of operation is to be used for the connection. When gateway 104 determines that the connection is a video connection, the transparent operation described above, is used. On the other hand, telephone connections are optionally handled by gateway 104 with relation to their content, for example by compressing the telephone signals.

Optionally, gateway 104 identifies video connections that are to be handled transparently, based on analysis of the received signals directed at identifying patterns unique to H.223 headers 208. For example, gateway 104 optionally searches for leading flags identifying the beginning of a H.223 stream and/or filler flags used in H.223 streams. In an exemplary embodiment of the invention, gateway 104 identifies video connections based on H.223 flags, for example the bit sequence 1000011110110010b.

The analysis is optionally performed in both directions. Alternatively or additionally, gateway 104 identifies PSTN signaling information such as in the user-to-user information field of the ISDN-PRI signaling, passing in parallel to the DS0 channel that carries the signals (i.e., on a separate control channel not within the DS0). Alternatively or additionally, gateway 104 identifies video connections that are to be handled transparently, based on IP signaling information, for example MGCP signaling. Further alternatively or additionally, gateway 104 is signaled to operate transparently, by a signaling tone (e.g., the 2100 Hz tone), which is used in the art to indicate that a transparent pass-through gateway mode of operation should be used. In some embodiments of the invention, cellular phone 102 generates the signaling when the video connection is established.

In some embodiments of the invention, in transparent operation, gateway 104 does not use echo cancellation. Optionally, in transparent handling of video signals, gateway 104 manages a fixed jitter buffer or a slowly adaptive buffer, in order to prevent frame loss due to harsh jitter buffer adaptations. In an exemplary embodiment of the invention, the jitter buffer has a fixed depth of between 50-100 ms, for example 80 ms. SIP connection 250 optionally identifies the combined packets 222 as transparent video signals. Alternatively, SIP connection 250 identifies combined packets 222 as belonging to the general class of voice band data (VBD), which is used to identify all signals that are handled transparently.

In handling signals received from cellular network 110, gateway 104 optionally packs the received signals 212 into combined packets 222. In some embodiments of the invention, combined packets 222 have a smallest payload frame size supported by media server 118, gateway 104 and any routers therebetween, in order to achieve a small end to end delay. In an exemplary embodiment of the invention, a packet payload corresponding to 10 ms is used. Alternatively, a varying size packet payload may be used. Optionally, in addition to loading the received signals into packets, gateway 104 adds to the packets error correction and/or detection fields and/or generates additional error correction (FEC) or other redundancy packets, which are transmitted along with the original data, such as described, for example, in the V.152 modem pass-through recommendation, the disclosure of which is incorporated herein by reference.

In some embodiments of the invention, signals 212 are loaded into combined packets 222 without relation to their content, such that application layer content may be broken at substantially any point between two different combined packets 222. For example, signals 212 are optionally loaded into combined packets 222 without relation to the locations of frame boundaries within signals 212, such that some of combined packets 222 may have a plurality of H.223 headers within a single packet and/or some of combined packets 222 may not have even a single H.223 header therein, although they carry frame data.

In the direction from IP network 120 to cellular network 110, gateway 104 optionally receives packets, takes off their RTP/UDP/IP headers and loads them consecutively onto the DS0 channel. Optionally, if redundancy is used in transmitting the data from media server 118 to gateway 104, gateway 104 removes any redundant packets and/or reconstructs lost packets using received redundant information. In some embodiments of the invention, if a packet 222 is lost, gateway 104 replaces the content of the packet 222 by filler bits, in order to ensure that the stream is full at all times.

In some embodiments of the invention, gateway 104 encrypts the transmitted signals, to prevent eavesdropping. Decryption may be performed by media server 118 and/or by IP phone 114. In the other direction, decryption is optionally performed by gateway 104.

In some embodiments of the invention, combined packets 222 are transmitted in IP network 120 without acknowledgement procedures, in order to minimize the delay of the transmitted video signals. Alternatively, for example in non-real time applications when the delay is not important, combined packets 222 are transmitted over a TCP reliable connection or on a reliable UDP connection, such as the SPRT protocol used in the ITU-V.150.1 recommendation.

Optionally, at the time of establishment of each connection, the parameters of the connection, such as whether reliable or non-reliable transmission is used, are determined, according to the needs of the connection. Alternatively, for the simplicity of establishment of the connection, substantially all video connections are handled by gateway 104 using the same parameters.

By having gateway 104 operate transparently, the processing resources required by gateway 104 are reduced substantially, and hence the cost of the gateway is lowered significantly. In fact, voice gateways currently available could be easily adapted for use as video gateways in accordance with embodiments of the present invention. Thus, the number of connections which can be handled by gateway 104 is much larger than can be handled by a prior art video gateway of similar processing power. Optionally, the processing resources required for handling a video connection is substantially the same as required for handling a voice or fax connection. Having all connections utilize similar amounts of processing resources allows simpler assignment of processing resources to connections, as, for example, there is no need to choose between one video connection and a plurality of other connections.

The transparent handling of video signals by gateway 104, transfers the complex handling of the video signals to a different unit, more suitable for performing the handling. Performing the conversion by media server 118 allows utilization of available processing resources of the media server at times at which relatively fewer video connections are handled, for other tasks of the media server.

### Network

In some embodiments of the invention, H.223 signals 212 are transmitted at a rate of 64 kbps, as is known in the art. Accordingly, network 120 optionally has capacity for a payload of at least 64 kbps. Alternatively, any of the methods described in Israel patent application 162,075, the disclosure of which is incorporated herein by reference, are used, to fit H.223 signals 212 onto an assigned channel on network 120.

### Media server

As mentioned above, media server 118 operates on combined packets 222 received from IP network 120 by removing their RTP and UDP/IP headers 214 and 216. Media server 118 then handles combined packets 222 using the methods performed in the art by video gateways. The handling of combined packets 222 optionally includes separating audio signals 202 and video signals 204 into separate packet streams. Media server 118 also terminates the H.245 control signals 206 on the one side and SIP control signals 240 on the other side, in a manner which provides end to end control of the connection between cellular telephone 102 and IP phone 114.

In the other direction, media server 118 receives audio, video and control packets belonging to separate IP connections that are correlated and converts them together into a single stream of combined packets 222 which are transmitted on a single UDP connection with UDP/IP headers 216. In some embodiments of the invention, the control signals from SIP control signals 240 are divided by media server 118 into two separate connections, the control signals directed to cellular phone 102 are converted into H.245 signals 206, while control signals for routing the combined packets 222 toward gateway 104 and/or communicating with gateway 104 are transmitted on SIP connection 250.

The conversion between IP packets 226 and 228 and combined packets 222 is optionally performed using any of the methods known in the art of video gateways. It is noted, however, that video gateways known in the art do not generate RTP headers 214 and UDP/IP headers 216 for the combined packets 222 they generate, as they transfer the combined packets they generate directly onto a switched communication link of mobile network 110, where the signals are transmitted continuously and not in packets.

Media server 118 optionally provides transcoding services for video and/or audio signals, for example between AMP and G.711 voice signals and/or between MPEG-4 and H.264 video signals. In some embodiments of the invention, media server 118 also provides rate adaptation, for example between the 64kbps rate of mobile networks and the 384 kbps rate, customarily used in IP networks. Alternatively, media server 118 may perform the translation between combined packets 222 and IP packets 226 and 228, without transcoding the formats of the video and/or audio signals.

In some embodiments of the invention, media server 118 is a dedicated unit for performing the acts described above with relation to Fig. 2. Alternatively, media server 118 performs a plurality of different tasks, including, for example, multimedia format transcoding in all-IP connections, management of video conferencing, messaging services, video on demand services, message storage and/or any other tasks known in the art to be performed by media servers. In some embodiments of the invention, media server 118 includes a large disk 128 on which video data is stored.

### Cellular telephone

In some embodiments of the invention, cellular telephone 102 operates without requiring any configuration in order to operate in accordance with the present invention. That is, the acts performed by cellular telephone 102 are the same if the H.223 signals 212 are handled by gateway 104 or by a prior art video gateway.

In other embodiments of the invention, cellular telephone 102 is adapted to generate, at the beginning of video connections, a signal that notifies gateway 104 that the connection carries video signals. Optionally, the signal used is one that is ignored by prior art video gateways.

### IP phone

In some embodiments of the invention, IP phone 114 operates in accordance with prior art procedures without requiring any adaptations for use with the present invention.

In other embodiments of the invention, as illustrated by IP phones 116, at least some of the IP phones are adapted to handle the IP signals from video gateway 104. In accordance with these embodiments, the video signals from gateway 104 are optionally transmitted directly to IP video phones 116, without passing through media server 118. Signals transmitted by video phone 116 are optionally in the same format as described above as being transmitted by media server 118 to gateway 104. In some embodiments of the invention, video phone 116 does not support the SIP and/or H.323 protocols, and always uses the H.223 format even when communicating with other video phones 116. Alternatively, video phone 116 supports a plurality of video protocols, including the SIP and/or H.323 protocols, and for each connection the format to be used is selected according to the specific other end of the connection.

In some embodiments of the invention, cellular phone 102 and IP video phone 116 use the same compressed video format (e.g., MPEG-4). Alternatively, the video signals transmitted between cellular phone 102 and IP phone 116 pass through media server 118 for video format transcoding but not for H.223 protocol termination.

The encapsulation of H.223 signals in an IP stream, is not limited in use only to connections between a cellular phone and an IP wire line phone. For example, encapsulation of H.223 signals in an IP stream may be used for communication between two cellular phones, one of which uses a circuit switch connection for communication of video signals and the other uses a packet based connection for the video signals. In Fig. 1, such a connection is illustrated by cellular phone 102D connecting through cellular network 1108, circuit switched connection 132B, gateway 104, packet switched connection 130 and cellular network 110A to cellular phone 120A.

Furthermore, in some embodiments of the invention, encapsulation of H.223 signals in an IP stream is used for communication between two cellular phones 102 connected to their networks 110 through switched circuit connections, but the networks 110 are connected to each other through an IP network 120, rather than through a switched circuit line 142.

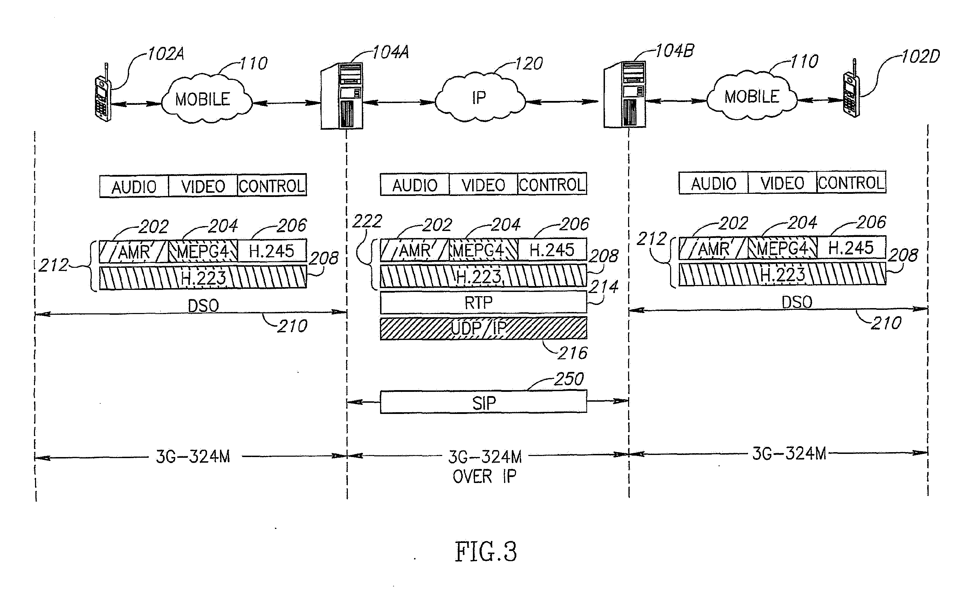

Fig. 3 is a schematic illustration of video signals transmitted between a pair of cellular video phones 102, in accordance with an exemplary embodiment of the invention. A connection between cellular phones 102A and 102D, passes through two gateways 104A and 104B at opposite ends of IP network 120. Instead of converting the H.223 signals into a plurality of UDP streams, which then need to be converted back into H.223 signals, gateways 104 encapsulate the H.223 signals into a single UDP stream to the other gateway 104, which simply removes the encapsulation.

As mentioned above, in some embodiments of the invention, gateway 104 is a dedicated gateway that only handles video connections. Optionally, in accordance with these embodiments, video gateway 104 belongs to an array of gateways that includes gateways for different types of connections. A switching circuit optionally directs the connections to one of the gateways according to the signals passing on the connections using any of the methods discussed above.

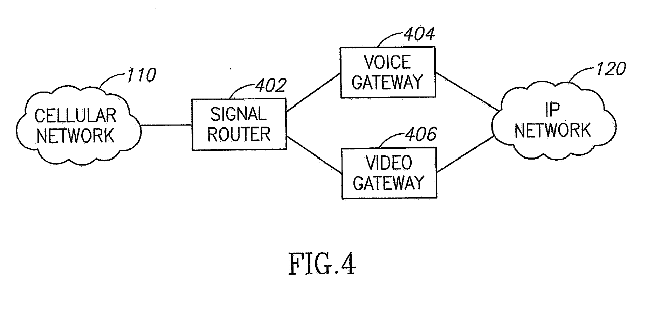

Fig. 4 is a schematic illustration of a gateway array, in accordance with an exemplary embodiment of the invention. A voice gateway 404 and a video gateway 406 are located between an IP network 120 and a cellular network 110. A signal router 402 receives the signals passing on the connection, and according to the contents of the signals, for example whether H.223 flags are identified, determines to which of gateways 404 or 406 the signals of the connection are to be delivered. It is noted that in the prior art, the signal identification is performed based on separate signaling and not the content of the signals of the connection.

It is noted that the gateway array may include more gateways than 404 and 406, for example additional voice and/or video gateways and/or other types of gateways, such as one or more modem gateways. In some embodiments of the invention, video gateway 406 operates substantially as described above regarding video gateway 104. Alternatively, video gateway 406 handles video signals using any other method, including methods in which video signals are converted into a plurality of different packet based connections corresponding to the different types of signals in the video stream from cellular network 110.

The principals of some aspects of the present invention may be used for substantially any type of video transmissions, including conversational video, video conferencing, video unicast or multicast services from video servers, video messaging services, video surveillance and/or other video streaming services.

It will be appreciated that the above described methods may be varied in many ways, including, changing the order of steps, and/or performing a plurality of steps concurrently. It should also be appreciated that the above described description of methods and apparatus are to be interpreted as including apparatus for carrying out the methods and methods of using the apparatus. Protocols mentioned herein above are brought by way of example and signals in accordance with other similar and non-similar protocols may also benefit from some embodiments of the present invention.

The present invention has been described using non-limiting detailed descriptions of embodiments thereof that are provided by way of example and are not intended to limit the scope of the invention. Many specific implementation details may be used. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art. Furthermore, the terms "comprise," "include," "have" and their conjugates, shall mean, when used in the claims, "including but not necessarily limited to."

It is noted that some of the above described embodiments may describe the best mode contemplated by the inventors and therefore may include structure, acts or details of structures and acts that may not be essential to the invention and which are described as examples. Structure and acts described herein are replaceable by equivalents which perform the same function, even if the structure or acts are different, as known in the art. Therefore, the scope of the invention is limited only by the elements and limitations as used in the claims.

## Claims

1. A method of handling video signals by a media server, comprising:
receiving packets of a plurality of separate packet connections including different types of signals belonging to a same multimedia communication session;
generating a single signal stream including the received different types of signals, in a synchronized manner;
packing the single signal stream into packets with packet headers of a single packet connection; and
transmitting the packets of the single packet connection onto a packet based network.

2. A method according to claim 1, wherein transmitting the packets comprises transmitting to a gateway.

3. A method according to claim 1 or claim 2, wherein the different types of signals include at least both voice and video signals.

4. A method according to any of the preceding claims, comprising transcoding signals of at least one of the different types of signals from a first encoding format in the received packets to a second encoding format, different from the first format, in the transmitted packets.

5. A method according to any of the preceding claims, wherein generating the single signal stream comprises generating a H.223 signal stream.

6. A method according to any of the preceding claims, wherein the single stream includes frames of signals and wherein packing the single signal stream into packets comprises packing without relation to borders between frames in the stream.

7. A method according to any of the preceding claims, wherein receiving the packets of the plurality of connections comprises receiving control signals of a control connection and wherein generating the single signal stream including the received different types of signals comprises including only some of the control signals from the control connection in the single signal stream.

8. A media server, comprising:
a packet network interface; and
a processor adapted to receive through the packet network interface packets of a plurality of separate packet connections including different types of signals belonging to a same multimedia communication session, to generate a single signal stream including the received different types of signals in a synchronized manner, to pack the single signal stream into packets with packet headers of a single packet connection and to transmit the packets of the single packet connection onto a packet based network, through the packet interface.

9. A media server according to claim 8, wherein the processor is additionally adapted to manage at least one of video conferencing, messaging services, video on demand services and message storage.
